# FASCICULE DE BREVET EUROPEEN

(11) **EP 0 527 937 B1**
(45) Date de publication et mention de la délivrance du brevet: **16.08.1995**
(21) Numéro de dépôt: 91910475.2
(22) Date de dépôt: 07.05.1991
(51) Int. Cl.: H05B 6/02

(54) **PROCEDE ET DISPOSITIFS DE RECHAUFFAGE PAR INDUCTION AU DEFILE D'UN PRODUIT METALLURGIQUE DE FORME ALLONGEE**
VERFAHREN UND VORRICHTUNG ZUM INDUKTIVEN ERWÄRMEN EINES SICH BEWEGENDEN LÄNGLICHEN GEGENSTANDES
PROCESS AND DEVICES FOR THE INDUCTION HEATING OF A MOVING ELONGATE METALLURGICAL PRODUCT

(30) Priorité: 10.05.1990 FR 9005824
(43) Date de publication de la demande: 24.02.1993
(73) Titulaire: ROTELEC, F-93176 Bagnolet Cédèx (FR)
(72) Inventeur: BUFFENOIR, Marc, F-57070 Metz (FR); GEORGES, Philippe, F-57180 Terville (FR); PIERRET, René, F-57050 Metz (FR)
(74) Mandataire: Bouget, Lucien
(86) Numéro de dépôt international: FR9100381
(87) Numéro de publication internationale: WO9117644

(56) Documents cités:
- EP-A- 0 170 556
- EP-A- 0 266 470
- DE-A- 2 315 502
- FR-A- 1 034 097
- GB-A- 1 339 571
- US-A- 4 849 598

## Description

L'invention concerne un procédé et un dispositif de réchauffage par induction au défilé d'un produit métallurgique de forme allongée.

Au cours des opérations d'élaboration et de transformation des produits métallurgiques longs, il peut être nécessaire de réchauffer le produit en cours de défilement dans l'installation tel qu'un laminoir effectuant l'élaboration et la transformation du produit. Ce réchauffage peut être nécessaire en particulier lorsqu'on désire effectuer un traitement thermomécanique du produit dans la chaude de laminage ou pour réaliser un apport thermique permettant d'obtenir un niveau enthalpique déterminé du produit, par exemple avant sa mise en forme.

Ce réchauffage peut être obtenu de manière classique en exposant la surface du produit à une ou plusieurs flammes de réchauffage produites par un ou plusieurs brûleurs disposés sur le trajet du produit en cours de déplacement.

Il est également connu, notamment dans le cas des produits longs à section circulaire, d'utiliser des inducteurs en forme de solénoïdes comportant un ou plusieurs bobinages à l'intérieur desquels on fait passer le produit, dans la direction de l'axe des bobinages confondu avec l'axe du produit long. Les bobinages de l'inducteur sont alimentés en courant alternatif et soumettent le produit à un flux magnétique traversant le produit dans la direction axiale et engendrant des courants induits dans la section du produit. On obtient ainsi un réchauffage par induction de la partie du produit long en défilement traversant l'inducteur, ce procédé de réchauffage ayant l'avantage de présenter une grande souplesse d'utilisation et une grande rapidité ainsi qu'un rendement thermique satisfaisant.

Cependant, l'utilisation d'un inducteur en forme de solénoïde présente certains inconvénients. Tout d'abord, le produit en défilement est entouré par l'inducteur, si bien qu'il est très difficile sinon impossible de régler le positionnement relatif du produit par rapport à l'inducteur, à moins d'utiliser un solénoïde dont le diamètre intérieur est très sensiblement supérieur au diamètre du produit. Il est bien évident que, dans ce cas, on doit accepter une forte diminution du rendement de l'inducteur et donc de la puissance maximale que l'on peut transmettre au produit.

En outre, l'engagement du produit dans l'inducteur ou dans les inducteurs successifs disposés sur son parcours présente des difficultés qui sont dues au faible jeu, existant entre le produit et la surface intérieure du solénoïde, nécessaire pour l'obtention d'un rendement satisfaisant et à la vitesse importante de défilement du produit, notamment lorsque le réchauffage est effectué sur le produit à la sortie d'un train de laminoir.

Dans le cas où le produit ou demi-produit en cours de transformation présente des défauts de forme, par exemple des déformations en forme de spatules de ski à ses extrémités ou des ondulations, il n'est pas possible de modifier la section de passage du solénoïde pour assurer le passage de ces parties déformées, si bien qu'il est nécessaire d'éloigner l'inducteur de la zone de passage du produit et d'interrompre le réchauffage, pour éviter des incidents pouvant avoir des conséquences désastreuses.

Dans le cas de produits longs présentant une section transversale de forme non circulaire et par exemple dans le cas de blooms ou de billettes ayant une section de forme carrée, les inducteurs en forme de solénoïdes ne permettent pas d'assurer à la fois un chauffage homogène du produit dans toute sa section et en particulier au voisinage des angles de la section carrée et un chauffage avec une grande puissance spécifique.

Enfin, pour obtenir un réchauffage d'une amplitude suffisante, il peut être nécessaire d'utiliser des installations dont la longueur déterminée par la longueur des solénoïdes peut être importante. De plus, ces installations relativement encombrantes sont limitées, quant à la puissance maximale qu'elles peuvent transmettre au produit.

Dans le cas du réchauffage des rives de tôles sur les trains à bande, on a proposé dans FR-A-2 583 249 d'utiliser un inducteur en forme de C disposé latéralement par rapport à la tôle en défilement, de manière que les pôles de cet inducteur soient placés de part et d'autre de la tôle, au voisinage de la rive dont on réalise le réchauffage. Cette rive est traversée par un flux magnétique sensiblement perpendiculaire à la tôle qui induit des courants ayant une forte intensité, en particulier au voisinage du bord externe de la tôle. Un tel procédé mettant en oeuvre un flux magnétique transversal par rapport à la rive n'est cependant pas applicable pour assurer un chauffage homogène d'un produit long dans toute sa section et pour produire un chauffage localisé de ce produit dans des zones déterminées telles que les angles d'une section polygonale.

Il en est de même du dispositif de réchauffage des rives d'une tôle décrit dans le EP-A-266.470.

Le but de l'invention est donc de proposer un procédé de réchauffage par induction au défilé d'un produit métallurgique de forme allongée en déplacement relatif dans la direction de son axe par rapport à au moins un inducteur magnétique, ce procédé pouvant permettre de réaliser un réchauffage homogène dans toute la section du produit ou un réchauffage localisé du produit, tout en étant d'une mise en oeuvre simple et efficace, quelles que soient la forme de la section et la vitesse de défilement du produit, même dans le cas où ce produit présente des déformations dans sa direction longitudinale.

Dans ce but, on soumet le produit métallurgique à au moins deux flux magnétiques ayant des directions non parallèles, transversales par rapport à la direction longitudinale du produit circulant entre au moins trois pôles de l'inducteur munis de bobinages et répartis angulairement de manière régulière autour de l'axe du produit.

L'invention est également relative à un dispositif de réchauffage au défilé d'un produit métallurgique comportant un ou plusieurs inducteurs de forme appropriée permettant de mettre en oeuvre le procédé de l'invention.

Afin de bien faire comprendre l'invention, on va maintenant décrire, à titre d'exemples non limitatifs, en se référant aux figures jointes en annexe, plusieurs modes de réalisation d'inducteurs permettant la mise en oeuvre du procédé suivant l'invention.

La figure 1 est une vue en perspective montrant un inducteur en forme de C produisant un champ et un flux magnétiques de direction transversale par rapport à la direction longitudinale d'un produit à section carrée en défilement dans l'entrefer de l'inducteur.

La figure 2 est une vue en perspective d'un premier mode de réalisation d'un inducteur suivant l'invention constitué par deux circuits magnétiques en forme de C espacés suivant la direction longitudinale du produit en cours de défilement.

La figure 3 est une vue schématique en élévation d'un second mode de réalisation d'un inducteur suivant l'invention constitué par deux circuits magnétiques situés sensiblement dans un même plan perpendiculaire à l'axe du produit en cours de défilement.

La figure 4 est une vue schématique en élévation d'un troisième mode de réalisation d'un inducteur suivant l'invention comportant trois pôles disposés à 120° autour de l'axe du produit en cours de défilement.

La figure 5 est une vue schématique en élévation d'un pôle d'un inducteur permettant la mise en oeuvre du procédé suivant l'invention dans le cas d'un produit à section circulaire.

La figure 6 est une vue schématique en élévation d'un pôle d'un inducteur permettant la mise en oeuvre du procédé suivant l'invention, dans le cas d'un produit long à section carrée.

La figure 7 est une vue représentant schématiquement la répartition des isothermes dans la section de forme circulaire d'un produit long en cours de réchauffage en utilisant un dispositif tel que représenté sur la figure 2.

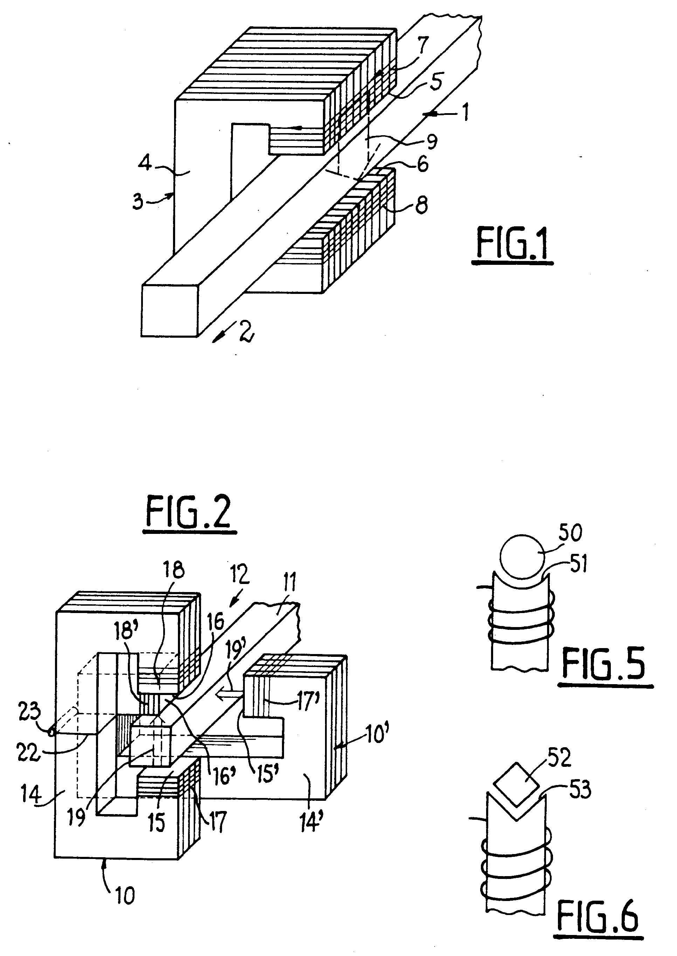

Sur la figure 1, on voit un produit long 1 à section carrée en cours de défilement, suivant la direction et le sens de la flèche 2, dans l'entrefer d'un inducteur 3 en forme de C. L'inducteur 3 comporte une culasse magnétique feuilletée 4 constituant deux pôles 5 et 6 situés en vis-à-vis entre lesquels est ménagé l'entrefer dans lequel passe le produit 1 en cours de défilement. Les extrémités de la culasse magnétique 4 situées au voisinage des pôles 5 et 6 portent des bobinages 7 et 8 qui sont parcourus par un courant alternatif à une fréquence et une intensité déterminées. Les bobinages 7 et 8 produisent un champ magnétique qui est canalisé par la culasse 4, de manière à produire un flux magnétique transverse 9 traversant le produit 1. Le flux magnétique 9 engendre la formation de courants induits dans le produit 1 qui assurent un certain réchauffage de ce produit.

Bien que le dispositif représenté sur la figure 1 permette de transmettre au produit une densité de puissance plus élevée qu'un inducteur en forme de solénoïde, et que l'inducteur en forme de C permette, comme il sera expliqué plus loin, de faciliter l'introduction du produit et le passage de zones déformées, la répartition non homogène de la chaleur transmise au produit par l'inducteur, se traduisant par une zone froide au voisinage du plan axial du produit parallèle au flux d'induction 9, interdit l'utilisation d'un tel inducteur pour le réchauffage au défilé de produits longs, par exemple à section carrée ou à section circulaire.

Sur la figure 2, on a représenté un premier mode de réalisation d'un inducteur permettant la mise en oeuvre du procédé suivant l'invention, cet inducteur étant constitué par deux circuits magnétiques 10 et 10′ en forme de C disposés de manière espacée, suivant la direction axiale 12 de défilement du produit 11 dont on effectue le réchauffage au défilé.

Chacun des circuits magnétiques 10 et 10′ est constitué de la même manière que l'inducteur 3 représenté sur la figure 1 et comporte une culasse magnétique 14 (14′) réalisée sous forme feuilletée et présentant deux parties d'extrémité en vis-à-vis 15 et 16 (15′ et 16′ pour l'inducteur 14′) constituant les pôles des inducteurs 10 et 10′ correspondants. Des bobinages 17 et 18 (17′ et 18′ dans le cas de l'inducteur 10′) sont enroulés autour des parties d'extrémité des culasses 14 et 14′ respectivement, au voisinage des pôles. Un tel inducteur est notamment décrit dans le document FR-A-2.583.249 dont l'enseignement est ici incorporé par référence.

Les inducteurs 10 et 10′ sont placés perpendiculairement l'un à l'autre, de manière que les pôles 15 et 16 d'une part et 15′ et 16′ d'autre part constituent des faces planes perpendiculaires entre elles. En outre, les inducteurs 10 et 10′ sont espacés suivant la direction 12 de défilement du produit, de manière qu'il ne se produise pas d'interaction magnétique entre les champs produits par les inducteurs 10 et 10′.

Les inducteurs 10 et 10′ soumettent le produit 11 en cours de défilement à deux flux d'induction magnétiques 19 et 19′ respectivement, dans deux zones du produit séparées par une certaine longueur axiale.

Les flux magnétiques 19 et 19′ sont orthogonaux et, dans le cas d'un produit tel que le produit 11 à section carrée, ces flux sont perpendiculaires chacun à deux faces latérales du produit 11.

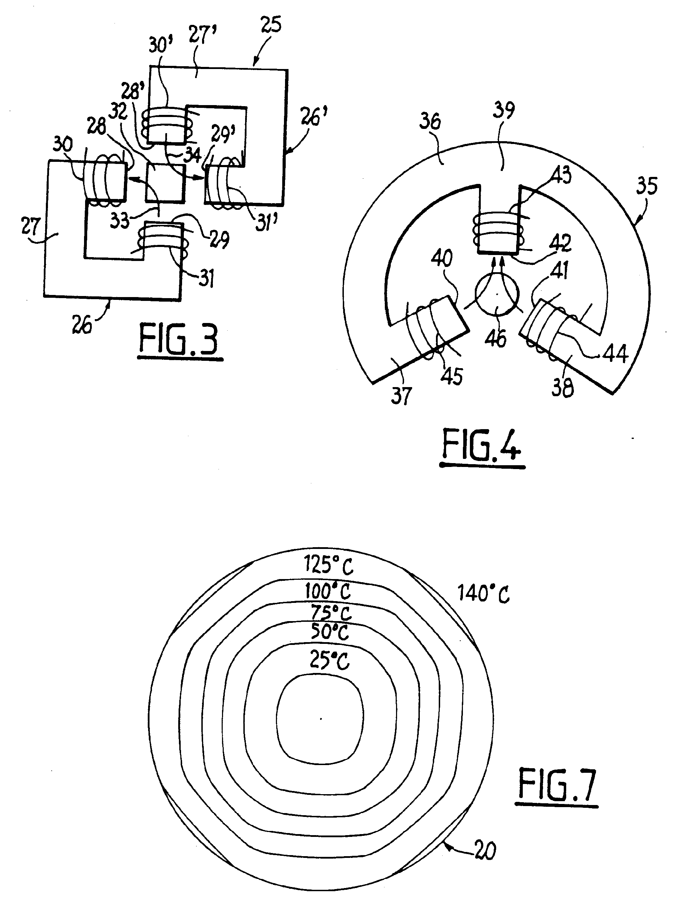

Sur la figure 7, on a représenté la répartition des isothermes dans la section droite d'un produit 20 en cours de défilement à l'intérieur des entrefers d'un inducteur double comportant deux parties en forme de C telles que représentées sur la figure 2, ce produit 20 étant soumis à deux flux d'induction transverses et orthogonaux tels que les flux 19 et 19′.

Le produit 20 présente un diamètre de 75 mm et les entrefers des circuits 10 et 10′ ont une largeur de 150 mm. Les deux circuits magnétiques constituant l'inducteur double sont espacés de 400 mm.

Les bobinages sont alimentés en courant alternatif à une fréquence de 340 Hz de manière à soumettre la longueur considérée du produit (400 mm) à une puissance de 90 kW pendant 15 secondes, pour la vitesse de défilement utilisée.

On constate que les isothermes sont sensiblement symétriques par rapport à l'axe du produit et présentent une forme proche de la section droite circulaire de ce produit. Cette forme et cette répartition des isothermes traduisent une bonne homogénéité du chauffage dans la section du produit.

Cette homogénéité et la répartition des isothermes sont comparables à l'homogénéité obtenue dans le cas d'un réchauffage en utilisant un solénoïde. En outre, le rendement électrique de l'inducteur est pratiquement identique au rendement électrique d'un inducteur en forme de solénoïde. Il est à remarquer que ce rendement électrique dépend de la valeur de l'entrefer et que le réglage de cette valeur en fonction des dimensions et de la géométrie du produit est facilité dans le cas d'un dispositif tel que représenté sur la figure 2 comportant une culasse magnétique en forme de C. (il est précisé qu'ici et dans toute la description, l'entrefer est l'espace entre les deux faces polaires d'un même circuit magnétique).

En effet, chacune des culasses en forme de C peut être réalisée en deux parties articulées entre elles au voisinage d'un plan de jonction 22 de manière à pouvoir pivoter autour d'un axe 23. On peut ainsi écarter les deux pôles et augmenter l'entrefer des inducteurs 10 et 10′, au moment de l'engagement du produit et en présence de déformations du produit long dans sa direction axiale. Il est ainsi possible de réduire considérablement le jeu entre la surface extérieure du produit et les pôles des inducteurs, au niveau des entrefers.

En outre, malgré l'utilisation de culasses magnétiques espacées suivant la longueur du produit, la longueur totale du dispositif inducteur peut être très inférieure à la longueur d'un inducteur en forme de solénoïde utilisé pour le réchauffage d'un produit analogue. La puissance surfacique élevée transmise par l'inducteur selon l'invention au produit en cours de défilement permet de réduire l'encombrement de l'installation de réchauffage.

Sur la figure 3, on a représenté une variante de réalisation d'un inducteur permettant de mettre en oeuvre le procédé suivant l'invention. L'inducteur 25 comporte deux circuits magnétiques 26 et 26′ constitués chacun d'une culasse 27 (27′) réalisée sous forme feuilletée et ayant une section de forme carrée interrompue pour constituer deux.faces polaires 28 et 29 (28′ et 29′ pour la culasse 27′) de forme plane et perpendiculaires entre elles et constituant des sections de deux branches perpendiculaires du cadre de forme carrée de la culasse correspondante. Les extrémités de la culasse voisines des pôles 28 et 29 (ou 28′ et 29′) sont entourées par des bobinages 30 et 31 respectivement (30′ et 31′ pour la culasse 27′).

Les circuits magnétiques 26 et 26′ sont disposés sensiblement dans le même plan de section droite du produit 32 en cours de défilement sur lequel on réalise le réchauffage.

Un premier entrefer est délimité entre les pôles 28 et 29 en regard de deux faces perpendiculaires du produit et un deuxième entrefer entre les pôles 29′ et 28′ en regard des deux autres faces perpendiculaires du produit. Les bobinages 30 et 31 et les bobinages 31′ et 30′ sont alimentés en courant alternatif à une fréquence déterminée et éventuellement avec un certain déphasage, de manière à soumettre le produit 32 à deux flux 33, 34 transversaux par rapport à la direction longitudinale du produit 32, au voisinage de deux angles opposés suivant une diagonale. Dans le cas d'un produit 32 à section carrée, le flux magnétique 33 est perpendiculaire à deux faces opposées latérales adjacentes du produit et le flux d'induction 34 aux deux autres faces latérales et adjacentes du produit 32. On obtient ainsi un chauffage du produit au voisinage des deux arêtes.

En déplaçant les circuits magnétiques 26 et 26′ l'un par rapport à l'autre dans des directions transversales, on peut réaliser, de manière sélective un chauffage localisé du produit dans certaines zones de sa section.

Il est à remarquer que le dispositif représenté sur la figure 3 permet de réaliser un réglage d'entrefer, par exemple au moment de l'introduction du produit et au passage de parties déformées de ce produit, sans utiliser de culasse magnétique articulée, le réglage étant effectué par simple déplacement des deux circuits magnétiques.

Sur la figure 4, on a représenté une seconde variante de réalisation d'un inducteur 35 suivant l'invention.

Cet inducteur est constitué par une culasse 36 réalisée sous forme feuilletée dont la section présente une partie en forme de portion de couronne et trois branches radiales 37, 38 et 39 dont les extrémités constituent respectivement trois pôles 40, 41 et 42 de l'inducteur.

Les branches radiales 37, 38 et 39 portent des bobinages électriques respectivement 43, 44 et 45, au voisinage des pôles 40, 41 et 42.

L'inducteur 35 permet de réaliser le réchauffage d'un produit 46 (par exemple à section circulaire) en défilement entre les pôles 40, 41 et 42, dans la direction de son axe.

Les bobinages 43, 44 et 45 peuvent être alimentés en courant triphasé à une certaine fréquence et ayant une certaine intensité de manière à engendrer des flux d'induction transverses par rapport à la direction longitudinale du produit 46 entre les pôles 40, 41 et 42.

Les bobinages peuvent être alimentés de manières différentes, par exemple de manière que les pôles 40 et 41 constituent des pôles positifs lorsque le pôle 42 constitue un pôle négatif, pour assurer la circulation de deux flux transverses dans des directions voulues pour assurer un chauffage localisé du produit dans des zones déterminées.

Il est évident également que la branche centrale 39 pourrait être dépourvue de bobinages, le champ magnétique étant créé par les bobinages portés par les seules branches radiales 37 et 38 du circuit magnétique.

Il est bien évident également que dans tous les modes de réalisation décrits jusqu'ici, les bobinages peuvent être disposés autour de la culasse du circuit correspondant dans une position qui ne soit pas voisine d'une extrémité polaire de la culasse. Cependant, dans ce cas, le rendement de l'inducteur est diminué.

Il est à remarquer que la forme et la disposition du ou des circuits magnétiques constituant l'inducteur suivant l'invention sont adaptées à la forme du produit et à l'effet de réchauffage recherché.

Par exemple, dans le cas où l'on désire effectuer un réchauffage préférentiel ou complémentaire des angles d'un produit à section carrée, l'inducteur représenté sur la figure 3 est particulièrement approprié.

Dans le cas où l'on désire effectuer le réchauffage de deux zones latérales du produit situées dans sa partie supérieure de part et d'autre de son plan de symétrie vertical, l'inducteur représenté sur la figure 4 est particulièrement approprié. Cet inducteur ne réalise qu'un réchauffage très limité de la partie inférieure du produit.

De manière à réaliser un meilleur couplage entre le produit et les pôles de l'inducteur en réduisant la valeur de l'entrefer pour obtenir un meilleur rendement électrique, on peut adopter une forme de pôle telle que représentée sur les figures 5 et 6.

Dans le cas d'un produit 50 à section droite circulaire, on peut utiliser une surface polaire 51 en forme de portion de cylindre.

Dans le cas d'un produit long 52 à section polygonale, par exemple à section carrée, on peut utiliser une surface polaire 53 constituée de deux parties planes disposées de manière angulaire.

Il est possible également d'imaginer d'autres inducteurs présentant des pièces polaires ayant une forme adaptée et utilisées en nombre voulu pour réaliser le réchauffage de certaines zones de pièces ayant des sections de forme complexe telles que des rails. On pourra par exemple imaginer des pièces polaires disposées autour du rail de manière à assurer le réchauffage de la partie de roulement du rail uniquement, à l'exclusion de sa partie de support. Dans tous les cas cependant, l'inducteur utilisé doit présenter des pièces polaires permettant d'engendrer au moins deux flux de directions transverses par rapport à la section du produit en défilement entre les pièces polaires.

Le procédé et les dispositifs suivant l'invention peuvent donc être utilisés pour effectuer le réchauffage au défilé de tout produit long, quelle que soit la forme de la section de ce produit long et quelles que soient la forme et la disposition de zones de ce produit dans lesquelles il est nécessaire de réaliser le réchauffage de manière préférentielle.

## Revendications

1. Procédé de réchauffage par induction au défilé d'un produit métallurgique (11, 32, 46, 50, 52) de forme allongée en déplacement relatif dans la direction de son axe par rapport à au moins un inducteur magnétique (10, 10′, 25, 35), caractérisé par le fait qu'on soumet le produit métallurgique (11, 32, 46, 50, 52) à au moins deux flux magnétiques (19, 19′, 33, 34) ayant des directions non parallèles, transversales par rapport à la direction longitudinale du produit circulant entre au moins trois pôles (15, 16, 15, 16′, 28, 29, 28′,29′, 40, 41, 42) de l'inducteur munis de bobinages et répartis angulairement de manière régulière autour de l'axe du produit.

2. Procédé de réchauffage suivant la revendication 1, caractérisé par le fait que les flux magnétiques (19, 19′) traversent le produit (11) en cours de défilement dans deux zones espacées suivant la direction axiale (12) du produit correspondant à sa direction de défilement, l'inducteur comportant deux paires de pôles (15, 16, 15′, 16′) se faisant face et disposées chacune dans une des deux zones espacées dans la direction axiale.

3. Procédé de réchauffage suivant la revendication 1, caractérisé par le fait que les flux magnétiques (33, 34) traversent le produit (32) en cours de défilement, sensiblement dans un même plan de section droite du produit (32), l'inducteur comportant au moins trois pôles (28, 29, 28′, 29′, 40, 41, 42) disposées dans une même zone.

4. Procédé de réchauffage suivant la revendication 2, caractérisé par le fait que les flux magnétiques (19, 19′) sont orthogonaux.

5. Dispositif de réchauffage par induction au défilé d'un produit métallurgique (11, 32, 46) de forme allongée en déplacement relatif dans la direction de son axe par rapport à au moins un inducteur magnétique (10, 10′, 25, 35), caractérisé par le fait que l'inducteur magnétique (10, 10′, 25, 35) est constitué par au moins une culasse magnétique (14, 14′, 27, 27′, 36) et comporte au moins trois pôles bobinés (15, 16, 15′, 16′, 28, 29, 28′, 29′ ; 40, 41, 42) répartis angulairement de manière régulière autour de l'axe du produit (11, 32, 46), de manière à constituer autour dudit produit au moins deux entrefers dans lesquels circulent deux flux magnétiques (19, 19′, 33, 34) transverses par rapport à la direction longitudinale dudit produit et non parallèles entre eux, par alimentation des bobinages (17, 18, 17′, 18′, 30, 30′, 31, 31′, 33, 44, 45) entourant la culasse magnétique au niveau de chacun des pôles.

6. Dispositif de réchauffage suivant la revendication 5, caractérisé par le fait que l'inducteur comporte deux culasses (10, 10′) en forme de C disposées perpendiculairement l'une par rapport à l'autre et espacées suivant la direction axiale (12) de déplacement du produit (11).

7. Dispositif de réchauffage suivant la revendication 5, caractérisé par le fait que l'inducteur (25) comporte deux culasses (27, 27′) en forme de cadre à section carrée dont deux côtés successifs sont découpés pour constituer deux surfaces polaires (28, 29, 28′, 29′) perpendiculaires entre elles, les deux culasses (27, 27′) étant disposées sensiblement dans un même plan de section droite du produit (32) en cours de défilement dans les entrefers constitués par les faces polaires (28, 29′, 29, 28′) des culasses (27, 27′).

8. Dispositif de réchauffage suivant la revendication 5, caractérisé par le fait que l'inducteur (35) comporte une culasse (36) ayant une partie en forme de portion de couronne et trois branches radiales (37, 38, 39) dirigées vers l'intérieur de la couronne dont les extrémités intérieures (40, 41, 42) constituent les faces polaires de l'inducteur (35).

9. Dispositif de réchauffage suivant l'une quelconque des revendications 5 à 8, caractérisé par le fait que les faces polaires (51) de la culasse de l'inducteur présentent la forme d'une portion de cylindre.

10. Dispositif de réchauffage suivant l'une quelconque des revendications 5 à 8, caractérisé par le fait que les faces polaires (53) de la culasse de l'inducteur sont délimitées par deux faces planes disposées de manière angulaire suivant un angle rentrant.

## Patentansprüche

1. Verfahren zum induktiven Erwärmen eines langgestreckten, sich in Richtung seiner Achse in bezug auf wenigstens eine magnetische Induktionsquelle (10,10′,25,35) bewegenden metallurgischen Produkts (11,32,46,50,52) im Durchlauf, dadurch **gekennzeichnet**, daß das metallurgische Produkt (11,32,46,50,52) wenigstens zwei magnetischen Flüssen (19,19′,33,34) mit nichtparalleler Richtung ausgesetzt wird, die sich quer zu der Längsrichtung des Produkts erstrecken und zwischen wenigstens drei Polen (15,16,15,16′,28,29,28′,29′,40,41,42) der Induktionsquelle verlaufen, die mit Spulen versehen sind und im Winkel gleichmäßig um die Achse des Produkts herum verteilt sind.

2. Verfahren zum Erwärmen gemäß Anspruch 1, dadurch **gekennzeichnet**, daß die magnetischen Flüsse (19,19′) das Produkt (11) während des Durchlaufs zwei in Axialrichtung (12) des Produkts entsprechend der Durchlaufrichtung in Abstand liegende Zonen durchlaufen, wobei die Induktionsquelle zwei Paare von Polen (15,16,15′,16′) umfaßt, die sich gegenüber liegen und angeordnet sind in einer der beiden in Abstand liegenden Zonen in der Axialrichtung.

3. Verfahren zum Erwärmen gemäß Anspruch 1, dadurch **gekennzeichnet**, daß die magnetischen Flüsse (33,34) das Produkt (32) während des Durchlaufs im wesentlichen in der Ebene eines senkrechten Schnitts des Produkts (32) durchdringen, welche Induktionsquelle wenigstens drei Pole (28,29,28,′,29′,40,41,42) umfaßt, die in ein und derselben Zone angeordnet sind.

4. Verfahren zum Erwärmen gemäß Anspruch 2, dadurch **gekennzeichnet**, daß die magnetischen Flüsse (19,19′) senkrecht zueinander verlaufen.

5. Vorrichtung zum induktiven Erwärmen eines langgestreckten, sich in Richtung seiner Achse in bezug auf wenigstens eine magnetische Induktionsquelle (10,10′,25,35) bewegenden metallurgischen Produkts im Durchlauf, dadurch **gekennzeichnet**, daß die magnetische Induktionsquelle (10,10′,25,35) gebildet wird durch wenigstens ein Magnetjoch (14,14′,27,27′,36) und wenigstens drei mit Spulen versehene Pole (15,16, 15′,16′,28,29,28′,29′;40,41,42) umfaßt, die im Winkel gleichmäßig um die Achse des Produkts (11,32,46) herum verteilt sind, derart, daß sie um das Produkt herum wenigstens zwei Luftspalte bilden, in denen zwei magnetische Flüsse (19,19′,33,34) quer in bezug auf die Längsrichtung des Produkts und nichtparallel zueinander zirkulieren, durch Speisung der Spulen (17,18, 17′,18′,30,30′,31,31′,33,44,45), die das magnetische Joch in Höhe jedes der Pole umgeben.

6. Vorrichtung zum Erwärmen gemäß Anspruch 5, dadurch **gekennzeichnet,** daß die Induktionsquelle zwei Joche (10,10′) in C-Form umfaßt, die senkrecht zueinander und in Axialrichtung (12) der Bewegung des Produkts (11) in Abstand zueinander angeordnet sind.

7. Vorrichtung zum Erwärmen gemäß Anspruch 5, dadurch **gekennzeichnet** daß die Induktionsquelle (25) zwei Joche (27,27′) in Rahmenform mit quadratischem Querschnitt umfaßt, bei denen zwei aufeinander folgende Seiten ausgeschnitten sind zur Bildung von zwei Polflächen (28,29,28′,29) senkrecht zueinander, wobei die beiden Joche (27,Z7′) im wesentlichen in ein und derselben Schnittebene senkrecht zum Produkt (82) während des Durchlaufs in den durch die Polflächen (28,29,28′,29′) der Joche (27,27′) gebildeten Luftspalten angeordnet sind.

8. Vorrichtung zum Erwärmen gemäß Anspruch 5, dadurch **gekennzeichnet** , daß die Induktionsquelle (35) ein Joch (36) umfaßt, die einen Bereich in der Form eines Kranzes mit drei radialen, nach innen in bezug auf den Kranz gerichteten Zweigen (37,38,39) umfaßt, deren innere Enden (40,41,42) die Polflächen der Induktionsquelle (35) bilden.

9. Vorrichtung zum Erwärmen nach einem der Ansprüche 5 bis 8, dadurch **gekennzeichnet**, daß die Polflächen (51) des Jochs der Induktionsquelle die Form eines Zylinderabschnitts aufweisen.

10. Vorrichtung zum Erwärmen nach einem der Ansprüche 5 bis 8, dadurch **gekennzeichnet**, daß die Polflächen (53) des Jochs der Induktionsquelle begrenzt sind durch zwei ebene Flächen, die im Winkel entsprechend einem zurückspringenden Winkel angeordnet sind.

## Claims

1. Process for the induction heating of a moving elongate metallurgical product (11, 32, 46, 50, 52) being displaced in the direction of its axis relative to at least one magnetic inductor (10, 10′, 25, 35), characterised in that the metallurgical product (11, 32, 46, 50, 52) is subjected to at least two magnetic fluxes (19, 19′, 33, 34) having non-parallel directions which are transverse relative to the longitudinal direction of the product circulating between at least three poles (15, 16, 15′, 16′, 28, 29, 28′, 29′, 40, 41, 42) of the inductor, which are equipped with windings and angularly distributed in a regular arrangement around the axis of the product.

2. Heating process according to claim 1, characterised in that the magnetic fluxes (19, 19′) pass through the product (11) as it travels in two zones spaced in the axial direction (12) of the product corresponding to its direction of travel, the inductor having two pairs of poles (15, 16, 15′, 16′) facing one another and each arranged in one of the two axially spaced zones.

3. Heating process according to claim 1, characterised in that the magnetic fluxes (33, 34) pass through the product (32) as it travels, substantially in the same cross sectional plane of the product (32), the inductor comprising at least three poles (28, 29, 28′, 29′, 40, 41, 42) arranged in the same zone.

4. Heating process accord to claim 2, characterised in that the magnetic fluxes (19, 19′) are orthogonal.

5. Apparatus for induction heating of a moving elongate metallurgical product (11, 32, 46) being displaced relatively in the direction of its axis relative to at least one magnetic inductor (10, 10′, 25, 35), characterised in that the magnetic inductor (10, 10′, 25, 35) consists of at least one magnet yoke (14, 14′, 27, 27′, 36) and has least three wire-wound poles (15, 16, 15′, 16′, 28, 29, 28′, 29′; 40, 41, 42) angularly distributed in a regular arrangement about the axis of the product (11, 32, 46) so as to form, around said product, at least two gaps in which two magnetic fluxes (19, 19′, 33, 34) circulate which are transverse to the longitudinal direction of said product and non-parallel to one another, by supplying the windings (17, 18, 17′, 18′, 30, 30′, 31, 31′, 33, 44, 45) surounding the magnet yoke at each of the poles.

6. Heating apparatus according to claim 5,
characterised in that the inductor has two C-shaped yokes (10, 10′) arranged perpendicularly to one another and spaced in the axial direction (12) of movement of the product (11).

7. Heating apparatus according to claim 5,
characterised in that the inductor (25) has two yokes (27, 27′) in the shape of a frame of square cross-section in which two successive sides are cut away to form two pole faces (28, 29, 28′, 29′) which are perpendicular to one another, the two yokes (27, 27′) being arranged substantially in the same cross-sectional plane of the product (32) passing through the gaps formed by the pole faces (28, 29′, 29, 28′) of the yokes (27, 27′).

8. Heating apparatus according to claim 5,
characterised in that the inductor (35) comprises a yoke (36) having a part shaped like a crown portion and three radial branches (37, 38, 39) directed toward the inside of the crown, the inner ends (40, 41, 42) of which constitute the pole faces of the inductor (35).

9. Heating apparatus according to any one of claims 5 to 8, characterised in that the pole faces (51) of the yoke of the inductor are shaped like a cylinder portion.

10. Heating apparatus according to any one of claims 5 to 8, characterised in that the pole faces (53) of the yoke of the inductor are delimited by two planar faces arranged angularly in a reflex angle.
